# EUROPEAN PATENT APPLICATION

(11) **EP 2 565 613 A1**
(43) Date of publication of application: **06.03.2013**
(21) Application number: 12182396.7
(22) Date of filing: 30.08.2012
(51) Int. Cl.: G01L 19/06, G01L 19/14, G01D 11/30

(54) **Backing ring for sensor assembly**

(30) Priority: 30.08.2011 US 201113221236
(71) Applicant: Hamilton Sundstrand Corporation, Windsor Locks, CT 06096-1010 (US)
(72) Inventor: Bales, Daniel A., Avon, Connecticut 06001 (US); Luker, William, Glastonbury, Connecticut 06033 (US); Russo, Charles J., Manchester, Connecticut 06040 (US); Matz, John E., San Diego, California 92122 (US); Saviengvong, Heath A., Wilbraham, Massachusetts 01095 (US)
(74) Representative: Hull, James Edward

(57) **Abstract**

Disclosed is a sensor assembly (100) including a port (102), which may support one or more headers (110), and a header (110) affixed to the port (102) by a weld joint (122). The header (110) may support a sensor (114), such as a pressure sensor. A backing ring (124) protects the assembly from damage that may be caused by welding.

## Description

### BACKGROUND

This disclosure relates to a backing ring for a sensor assembly, which may be a pressure sensor assembly.

Sensors, such as pressure sensors, are known to be used in a variety of applications, including aircraft and automobile systems. One or more sensors may be supported by a header which is received in a port, and the port may be in communication with the oil and/or fuel systems of an aircraft, as examples. The headers are positioned in the port such that the sensors respond to changes in pressure in the associated oil or fuel system.

### SUMMARY

Disclosed is a sensor assembly including a port, which may support one or more headers, and a header affixed to the port by a weld joint. The header may support a sensor, and a backing ring protects the assembly from damage that may be caused by welding. Further disclosed is a method of providing the assembly.

### BRIEF DESCRIPTION OF DRAWINGS

The drawings can be briefly described as follows:
Figure 1 is a schematic representing the manner in which a port may be arranged relative to an overall system;
Figure 2A is a cross-sectional view of a known sensor assembly;
Figure 2B is a close-up view of the designated area from Figure 2A;
Figure 3A is a cross-sectional view of an example of the disclosed sensor assembly including a backing ring formed integrally with the port;
Figure 3B is a close-up view of the designated area from Figure 3A;
Figure 4A is a cross-sectional view of another example of the disclosed sensor assembly including a separate backing ring;
Figure 4B is a front view of the separate backing ring from Figure 4A;
Figure 4C is a cross-sectional view taken along line A-A from Figure 4B;
Figure 5 is a cross-sectional view of still another example sensor assembly;
Figure 6 is a cross-sectional view of yet another example of the disclosed sensor assembly; and
Figure 7 is a cross-sectional view of another disclosed sensor assembly, including a backing ring with spacing tabs.

### DETAILED DESCRIPTION

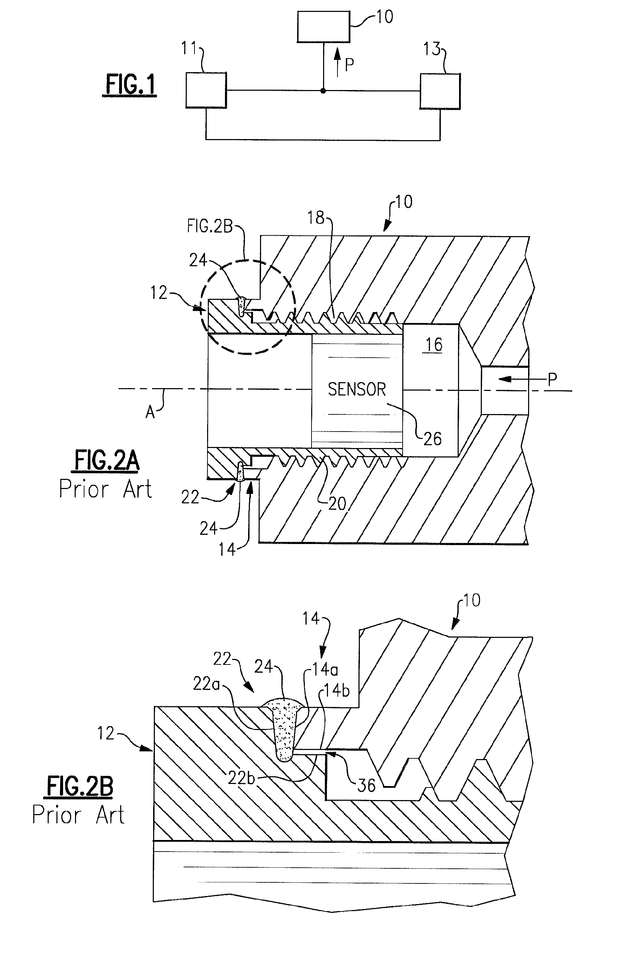

Referring to Figure 1, a port 10 may be in communication with an oil and/or fuel system of an aircraft or automobile, as examples, and it may support one or more sensors configured to respond to changes in pressure in the associated system. In particular, the port 10 may be positioned between a pump 11 (e.g., an oil or fuel pump) and a system component 13 (e.g., a turbine engine component) such that the sensors respond to the system pressure P.

The aforementioned sensors are typically associated with respective headers 12, which are affixed to the port 10 by welding. A known arrangement is shown in Figures 2A-2B. In Figure 2A, the port 10 includes an outer rim 14 and a chamber 16 in communication with the oil and/or fuel system to be monitored. The chamber 16 is defined about a chamber axis A and is provided with threads 18 to correspond to the threads 20 of the header 12. A portion of the header 12 is threadably received in the chamber 16, and a circumferential shelf 22 of the header 12 abuts the outer rim 14 of the port 10. A weld joint 24 is then provided between the circumferential shelf 22 and the outer rim 14, as shown in detail in Figure 2B, by an electron beam or laser weld, as examples.

The sensor 26 may be a pressure sensor responsive to changes in pressure P in the monitored system. In one example, the sensor 26 is provided with a diaphragm deflectable by the pressure P. The deflection of the diaphragm may be reflected in an electronic signal, and the sensor 26 may be in communication with various circuitry to provide a pressure reading. This is just one example type sensor, and this application extends to other types (including other types of pressure sensors, and sensors that measure other physical quantities other than pressure).

The weld joint 24 is provided between an abutting face 22a of the circumferential shelf 22 and an abutting face 14a of the port outer rim 14. Given the nature of the circumferential shelf 22 (e.g., which includes the abutting face 22a and the inner radial face 22b), a fine gap 36, or "crack," exists between header 12 and the port 10 (e.g., specifically between the inner radial face 22b of the circumferential shelf 22 and the inner radial face 14b of the outer rim 14).

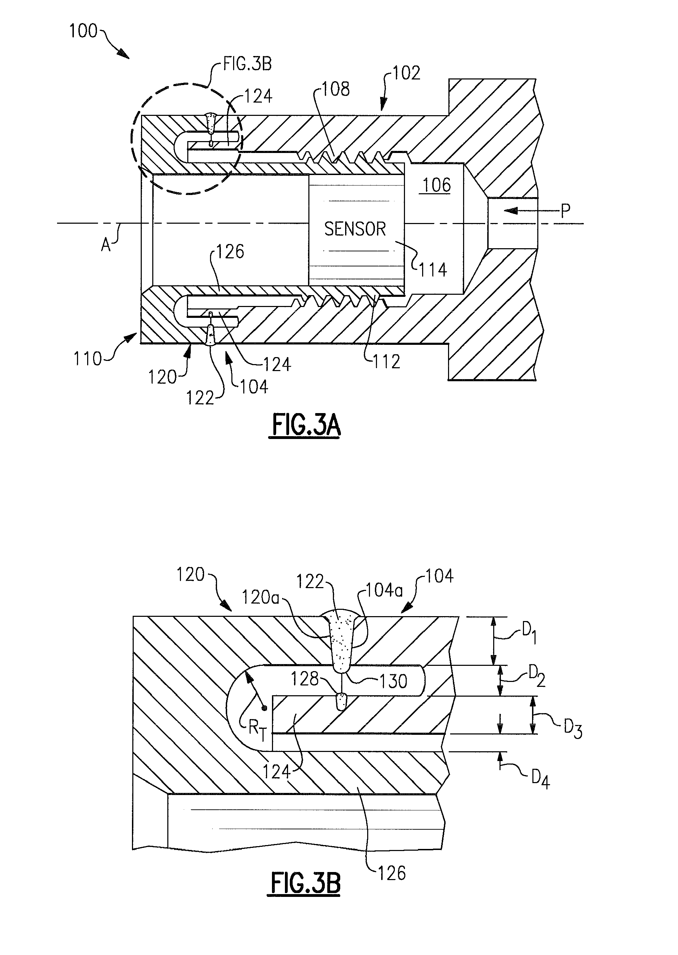

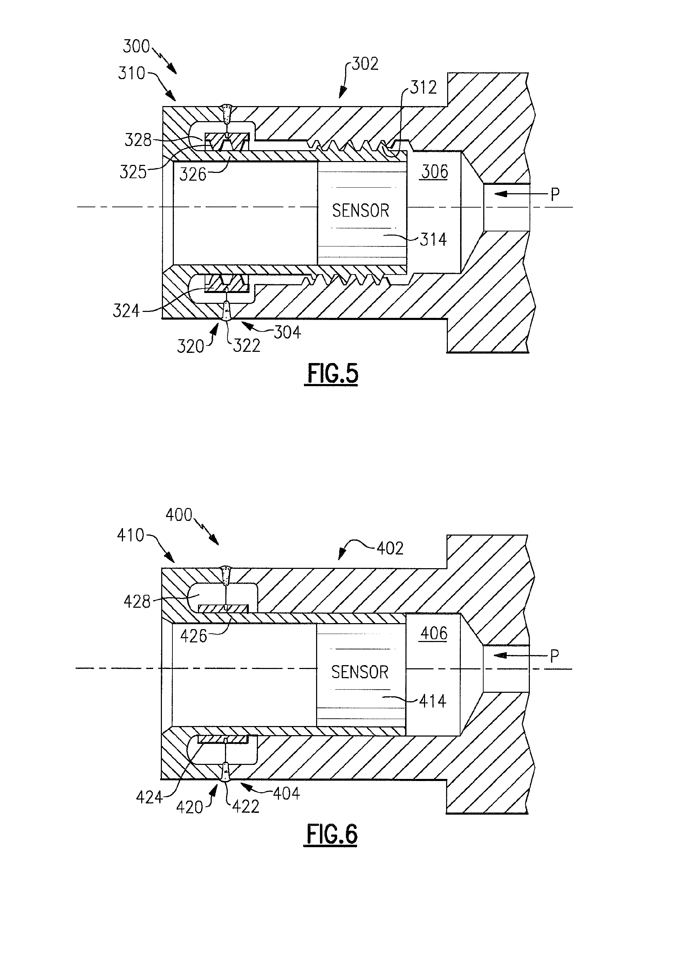

A first example of the disclosed sensor assembly 100 is shown in Figures 3A-3B. A port 102 is provided with an outer rim 104 and a chamber 106 defined radially inward thereof about a chamber axis A. The chamber 106 may include threads 108, and threadably receives at least a portion of the header 110, including the threads 112 of the header 110. While threads 108 and 112 are shown, the header 110 may be received in the chamber 106 in another known manner, such as being press-fit therein without the use of threads (as in the Figure 6 embodiment, discussed below).

At one axial end thereof, the header 110 supports a sensor 114, which may be a pressure sensor, responsive to the pressure P within the port 102. Again, this disclosure extends to other types of sensors. When the sensor 114 is received in the chamber 106 as shown, an outer rim 120 of the header 110 abuts the outer rim 104 of the port 102. A circumferential weld joint 122 is provided between the outer rims 104, 120 by an electron beam or laser welding process to sealably join the header 110 to the port 102 (e.g., specifically, to join the radially outer abutting faces 104a, 120a of the rims 104 and 120, as shown in Figure 3B).

Further, a backing ring 124 is formed integrally with the port 102, and is positioned radially inward (e.g., closer to the axis A) of the weld joint 122 to protect the radially inner wall 126 of the header 110, as well as the sensor 114, from being struck, or damaged, by the beam from the welding process. In the example, the weld joint 122 is provided about the entire circumference of the rims 104 and 120, and therefore the backing ring 124 extends continuously about the axis A. Further, and as shown, the backing ring 124 is axially aligned at a point where the weld joint 122 is expected, between the rims 104 and 120.

The weld joint 122 is provided between the radially outer abutting faces 104a, 120a of the rims 104, 120, respectively. In order to provide the weld joint 122, the welding process is tuned such that the weld beam fully welds the abutting faces 104a, 120a together (e.g., fully welding the distance, or thickness, D₁ of the outer rims 104, 120) without damaging the critical components within the radially inner wall 126 of the header 110. To the extent that the beam from the welding process would have damaged the radially inner wall 126, the backing ring 124 is damaged instead. As shown, the backing ring 124 has been damaged (e.g., at damage 128) during welding, but the radially inner wall 126 has not. The backing ring 124 has a radial thickness (e.g., the thickness D₃) selected such that the weld beam will not fully penetrate the backing ring 124.

In the example shown, the backing ring 124 is not consumed during welding. Instead, the backing ring 124 is spaced radially inward from the outer rim 104 by a distance D₂ so that the weld joint 122 ends at a convex end surface 130 radially outward of the backing ring 124. The backing ring 124, which has a thickness D₃, is also spaced outward of the radially inner wall 126 of the header 110 by a distance D₄ to avoid interference with the threads 112 of the header 110 during initial assembly. Further, the header 110 may be curved with a continuous turning radius R_{T} between the radially inner wall 126 and the outer rim 120.

In the shown example, the distance D₁ relates to distance D₂ by a ratio within a range of 1.2:1 and 1.6:1. Further, the ratio of the distance D₁ to the thickness D₃ may be within a range of 1.3:1 and 1.4:1, and the ratio of the distance D₁ to the distance D₄ may be within a range of 1.7:1 and 2:1.

While the backing ring 124 has been shown and described as being formed integrally with the port 102, the backing ring may be formed integrally with the header 110, or formed separately from both the port 102 and the header 110, as in the embodiments discussed below.

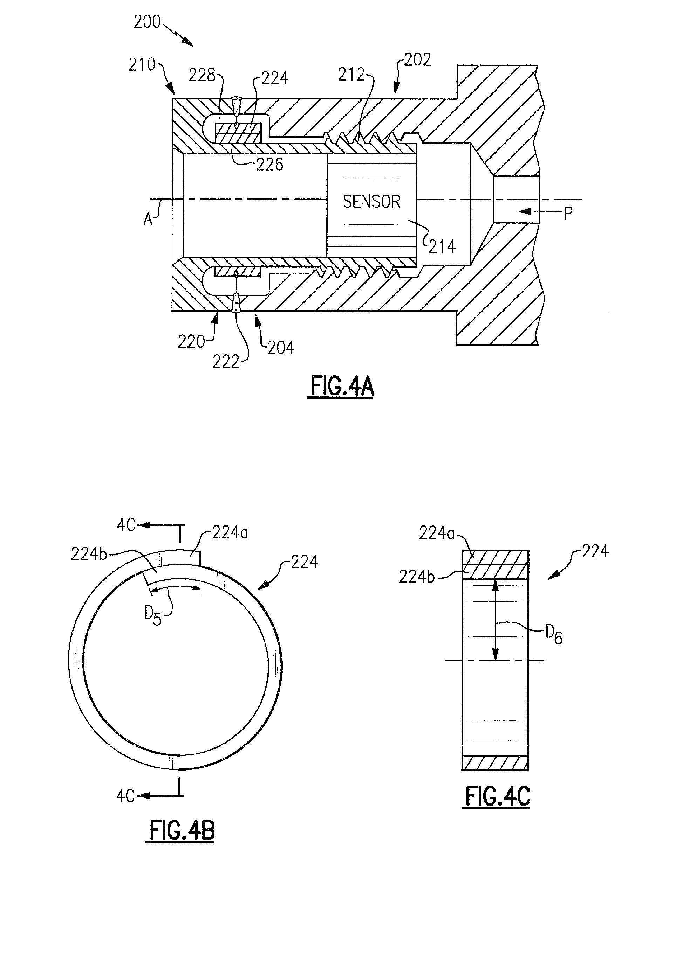

Another example sensor assembly 200 is shown in Figures 4A-4C. To the extent not otherwise described or shown, the sensor assembly 200 corresponds to the sensor assembly 100 of Figures 3A-3B, with like parts having reference numerals preappended with a "2" instead of a "1."

As noted, the backing ring 224 is formed separately from the port 202 and header 210, and is spaced radially inward of the weld joint 222, similar to the embodiment of Figures 3A-3B. The backing ring 224 is positioned inward of the port 202 and header 210, and is further located adjacent the inner wall 226 of the header 210. During assembly, the backing ring 224 clears the threads 212 of the header 210 by being elastically widened. That is, the backing ring 224 is essentially a circular strip of material overlapping itself at its ends 224a, 224b, as shown in Figures 4B-4C. The backing ring 224 may be formed in the position generally shown in Figure 4B (e.g., a "relaxed" position), such that the backing ring 224 is biased back to that position when widened to clear the threads 212. The ends 224a, 224b of the backing ring 224 may circumferentially overlap one another by a distance (or, arc length) D₅ selected to ensure the backing ring 224 completely protects the entire circumference of the inner wall 226 of the header 210. In that regard, the distance (or, radius) D₆ of the backing ring 224 generally corresponds to that of the inner wall 226.

The natural bias of the backing ring 224, noted above, may prevent the backing ring 224 from floating in the space 228 between the outer rim 220 and inner wall 226 of the header 210. Thus, the backing ring 224 may not be consumed in the weld joint 222 during welding, while still preventing the inner wall 226 from being damaged.

Still another example sensor assembly 300 is shown in Figure 5. To the extent not otherwise described or shown, the sensor assembly 300 corresponds to the sensor assemblies 100, 200 with like parts having reference numerals preappended with a "3" instead of a "1" or "2."

In the embodiment of Figure 5, the backing ring 324 is one-piece and has a continuous, uninterrupted circumference. The diameter of the backing ring 324 must be large enough to clear the threads 312 before the header 310 is received in the chamber 306. The backing ring 324 may include optional threads 325 to allow the backing ring to be threaded over the threads 312 of the header. If the threads 325 are excluded, the backing ring 324 may float in the space 328, and in that case it is possible that, during welding, the backing ring 324 may be partially consumed in the weld joint 322. In either case, the backing ring 324 will protect the inner wall 326 from damage.

Yet another example sensor assembly 400 is shown in Figure 6. To the extent not otherwise described or shown, the sensor assembly 400 corresponds to the sensor assemblies 100, 200, 300 with like parts having reference numerals preappended with a "4" instead of a "1," "2" or "3."

Figure 6 represents the manner in which the header 410 may be press-fit into the port 402 in the case that the header 410 and port 402 do not include threads. The backing ring 424 in the Figure 6 embodiment may be sized to be press-fit around the inner wall 426 (e.g., due to the absence of any threads on the header 410), and therefore the backing ring 424 is spaced inwardly from the weld joint 422 and may not be consumed during welding.

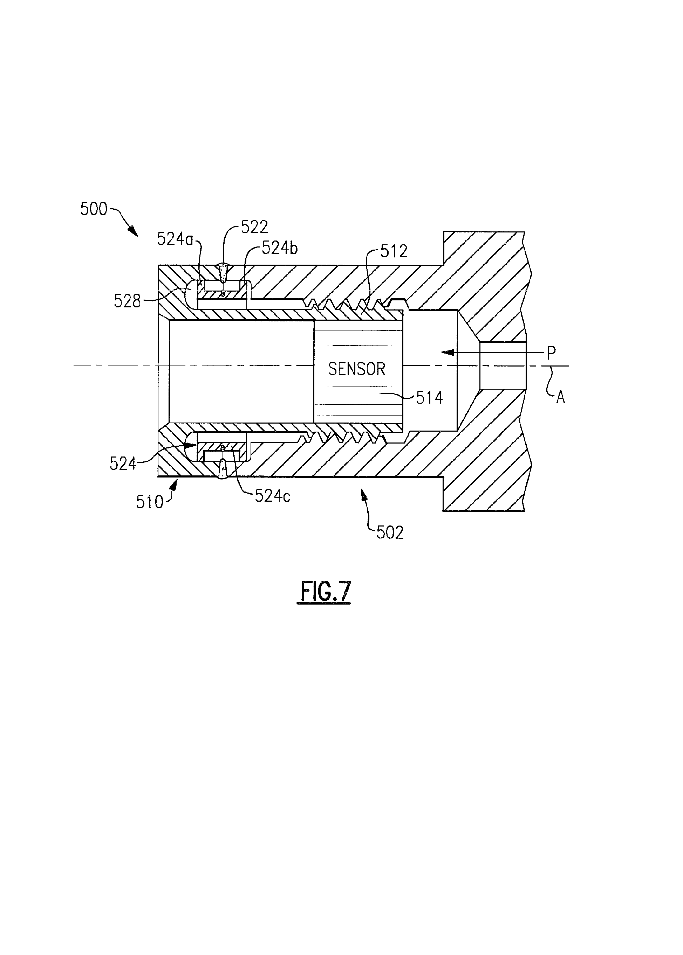

Another sensor assembly 500 is shown in Figure 7. To the extent not otherwise described or shown, the sensor assembly 500 corresponds to the sensor assemblies 100, 200, 300, 400 with like parts having reference numerals preappended with a "5" instead of a "1," "2," "3," or "4."

As is the embodiment of Figure 5, the diameter of the backing ring 524 is large enough to clear the threads 512 of the header 510 before insertion of the header 510 into the port 502. To prevent consumption of the backing ring 524 during welding, however, the backing ring 524 is substantially prevented from floating in the space 528 by way of spacing tabs 524a, 524b provided at ends thereof. While two tabs 524a, 524b are shown, any number of tabs may be used. Further, the tabs 524a, 524b may extend continuously around the entire circumference of the backing ring 524, however it is not necessary. By virtue of the tabs 524a, 524b, the central body portion 524c of the backing ring 524 is spaced from the weld joint, and the backing ring 524 is therefore not consumed during welding (similar to the embodiments of Figures 3A-3B, 4A-4C and 6).

The disclosed sensor assemblies may be subjected to extremely high pressures (e.g., the pressure P), such as 5,000 psi (approximately 34 MPa). Therefore, the disclosed port, header and backing ring may be machined from a high strength steel, or other suitable material.

The disclosed sensor assemblies thus provide arrangements with relatively low stress concentrations (e.g., reducing the concentrations of stress experienced by the assemblies from the pressure P within the port), leading to increased sensor life and performance. Furthermore, the sensor assembly 100 has the added benefit of eliminating the possibility that the backing ring 124 may be left out during assembly.

While it has been mentioned that the disclosed assemblies may be useful in aerospace and automotive applications, this disclosure may be used in other areas, including in various applications in the medical and electronics industries. Further, the disclosed assemblies may be used with sensors others than pressure sensors.

One of ordinary skill in this art would understand that the above-described embodiments are not limiting, and that, instead, modifications of this disclosure would come within the scope of the claims. Accordingly, the following claims should be studied to determine their true scope and content.

## Claims

1. A sensor assembly (100;200;300;400;500), comprising:
a port (102;202;302;402;502);
a sensor (114;214;314;414;514);
a header (110;210;310;410;510) supporting the sensor (114...514), the header (110...510) being affixed to the port (102...502) by a weld joint (122;222;322;422;522) provided between radially outer abutting faces of the port (102...502) and the header (110...510); and
a backing ring (124;224;324;424;524) positioned inward of the abutting faces (104a,120a) of the port (102...502) and the header (110...510).

2. The sensor assembly (500) of claim 1, wherein the backing ring (524) includes spacing tabs (524a,524b) to space a central body portion (524c) of the backing ring (524) inward of the weld joint (522).

3. The sensor assembly (400) of claim 1 or 2, wherein the header (410) is press-fit into the port (402) without the use of threads.

4. The sensor assembly (100) of any of claims 1 to 3, wherein the backing ring (124) is integrally formed with one of the header (110) and the port.

5. The sensor assembly (100) of claim 4, wherein the backing ring (124) is integrally formed with the port (102).

6. The sensor assembly (100) of any preceding claim, wherein the radially outer abutting face (120a) of the header (110) has a thickness extending a first distance (D1), and wherein the backing ring (124) is spaced from the radially outer abutting face (120a) by a second distance (D2), the first distance (D1) corresponding to the second distance (D2) by a ratio within the range of 1.2:1 and 1.6:1.

7. The sensor assembly (100) of claim 6, wherein the backing ring (124) has a thickness extending a third distance (D3), the first distance (D1) corresponding to the third distance (D3) by a ratio within the range of 1.3:1 and 1.4:1.

8. The sensor assembly of claim 6 or 7, wherein the backing ring (124) is spaced outward from a radially inner wall of the header (110) by a fourth distance (D4), the first distance (D1) corresponding to the fourth (D4) by a ratio within the range of 1.7:1 and 2:1.

9. The sensor assembly (100...500) of any preceding claim, wherein the backing ring (124...524) is spaced inward of the weld joint.

10. The sensor assembly (200..,500) of any preceding claim, wherein the backing ring (224...524) is formed separately from the header (210...510) and the port (102...502).

11. The sensor assembly (100;300;400;500) of any preceding claim, wherein the backing ring (124;324;424;524) has a continuous circumference.

12. The sensor assembly (200) of any of claims 1 to 10, wherein the backing ring (224) has ends (224a,224b), the ends (224a,224b) circumferentially overlapping one another.

13. A pressure sensor assembly (100;200;300;400;500), comprising:
a port (102;202;302;402;502) having a radially outer abutting face (104a);
a header (110;210;310;410;510) supporting a pressure sensor (114;214;314;414;514), the header (110;210;310;410;510) having a radially outer abutting face (120a) affixed to the abutting face of the port (102...502);
a chamber defined inward of the abutting faces; and
a backing ring (124;224;324;424;524) positioned inward of the abutting faces (104a,120a) and outward of the chamber (106...506).

14. The pressure sensor assembly (100...500) of claim 13, wherein the backing ring (124...524) is spaced inward of a weld joint (122;222;322;422;522) provided between the radially outer abutting faces (104a,120a) of the port and the header (110...510).

15. A method of providing a sensor assembly (100;200;300;400;500), comprising the following steps:
a) receiving a header (110;210;310;410;510) at least partially in a port (102;202;302;402;502), the header (110...510) supporting a sensor;
b) welding the header (120...510) to the port (102...502) to provide a weld joint (122;222;322;422;522) therebetween; and
c) positioning a backing ring (124;224;324;424;524) inward from the header (110...520) and the port (102...502) before step b).
